# EUROPÄISCHE PATENTANMELDUNG

(11) **EP 0 825 423 A1**
(43) Veröffentlichungstag der Anmeldung: **25.02.1998**
(21) Anmeldenummer: 97112396.3
(22) Anmeldetag: 18.07.1997
(51) Int. Cl.: G01F 23/04

(54) **Vorrichtung zur Messung und/oder Kontrolle eines Flüssigkeitsniveaus**

(30) Priorität: 24.07.1996 DE 19629863; 20.06.1997 DE 19726294
(71) Anmelder: Hildebrandt, Peter, 53783 Eitorf (DE); Schiefelbusch GmbH, 53567 Buchholz (DE); Beck, Hubert, 53783 Eitorf (DE)
(72) Erfinder: Hildebrandt, Peter, 53783 Eitorf (DE); Schiefelbusch, Willi, 53783 Eitorf (DE); Beck, Hubert, 53783 Eitorf (DE)

(57) **Zusammenfassung**

Vorrichtung zur Messung und/oder Kontrolle eines Flüssigkeitsniveaus in einem Reservoir, wobei mindestens ein minimales und/oder maximales Niveau darstellbar ist, indem die Vorrichtung in ein rohrförmiges Element des Reservoirs einbringbar ist, wobei die Vorrichtung aus einem außerhalb des Reservoirs angeordneten Handgriff und mit innerhalb des Reservoirs angeordneten Meßmitteln besteht und daß die Meßmittel mit einer durch den Handgriff (2) bedienbaren Reinigungsvorrichtung (4) versehen sind, wobei innerhalb des rohrförmigen Körpers ein Element (5) angeordnet ist, welches bis in den Bereich des Handgriffes verläuft, und daß sich das Element ausgehend vom Handgriff den rohrförmigen Körper (6) durchdringend bis in das Reservoir hinein erstreckt, wobei im Bereich des Handgriffes oder des dem Handgriff zugewandten Bereich des Elementes und dem rohrförmigen Körper eine Rastvorrichtung (7) zur festen aber lösbaren Verbindung zwischen dem Element und dem rohrförmigen Körper angeordnet ist.

## Beschreibung

Die Erfindung bezieht sich auf eine Vorrichtung zur Messung und/oder Kontrolle eines Flüssigkeitsniveaus in einem Reservoir, wobei mindestens ein minimales und/oder maximales Niveau darstellbar ist, indem die Vorrichtung in ein rohrförmiges Element des Reservoirs einbringbar ist, wobei die Vorrichtung aus einem außerhalb des Reservoirs angeordneten Handgriff und mit innerhalb des Reservoirs angeordneten Meßmitteln besteht und daß die Meßmittel mit einer durch den Handgriff bedienbaren Reinigungsvorrichtung versehen sind.

Es sind bisher Vorrichtungen zur Messung und/oder Kontrolle von Flüssigkeitsspiegeln bekannt, bei denen über eine rohrförmige Öffnung ein Meßstab in ein Flüssigkeitsreservoir eintauchbar ist. Derartige Vorrichtungen werden vorzugsweise zur Ölkontrolle von Otto- und Dieselmotoren verwendet. Hierbei wird ein Ölmeßstab in die Öffnung zum Verbleib eingebracht. Zur Kontrolle des Ölspiegels wird dieser Ölmeßstab herausgezogen, abgewischt und wieder in die rohrförmige Öffnung eingebracht, so daß anschließend der Ölspiegel den Ölmeßstab benetzt und nach wiederholtem Herausnehmen ablesbar ist. Nachteilig ist hierbei, daß bei jeder Messung durch Abwischen des Ölmeßstabes Öl aus dem Reservoir in die Atmosphäre gelangt, dieses Prinzip ist ökologisch nicht vertretbar, darüber hinaus besteht die Gefahr der Verschmutzung.

Darüber hinaus sind Füllstand-Meßstäbe bekannt (z.B. DE-OS 40 27 286), bei denen im unteren Bereich des Meßstabes eine Reinigungsvorrichtung angeordnet ist. Diese Reinigungsvorrichtung arbeitet mit dem der Ölwanne oder dem Motor zugeordneten rohrförmigen Element zusammen. Die Reinigungsvorrichtung muß somit jeweils an die entsprechenden Bauausführungen angepaßt werden. Ein universeller Einsatz ist somit nicht gegeben. Desweiteren ist von Nachteil, daß die umfangreiche Konstruktion der Reinigungsvorrichtung nach dem Herausziehen des Stabes mit Restöl behaftet ist, so daß diese Vorrichtung ökologisch bedenklich ist.

Aufgabe der Erfindung ist es, eine Vorrichtung zur Messung und/oder Kontrolle eines Flüssigkeitsniveaus zu schaffen, welche einfach handhabbar, direkt ablesbar und ökologisch unbedenklich ist und die darüber hinaus mit einer Hand bedienbar ist.

Zur Lösung dieser Aufgabe ist erfindungsgemäß vorgesehen, daß innerhalb des rohrförmigen Körpers ein Element angeordnet ist, welches bis in den Bereich des Handgriffes verläuft, und daß sich das Element ausgehend vom Handgriff den rohrförmigen Körper durchdringend bis in das Reservoir hinein ersteckt, wobei im Bereich des Handgriffes oder des dem Handgriff zugewandten Bereich des Elementes und dem rohrförmigen Körper eine Rastvorrichtung zur festen aber lösbaren Verbindung zwischen dem Element und dem rohrförmigen Körper angeordnet ist.

Vorteilhaft ist hierbei, daß die Meßmittel direkt mit dem Handgriff verbunden sind, wobei gleichzeitig eine Reinigungsvorrichtung eingesetzt werden kann, die nach dem Herausziehen der Vorrichtung aus dem Reservoir ein sofortiges Ablesen des tatsächlichen Niveaus gestattet. Der gesamte Meßvorgang wie auch der Reinigungsvorgang des Meßmittels ist problemlos mit einer Hand bedienbar.

Nach einem weiteren wesentlichen Merkmal ist vorgesehen, daß die Restvorrichtung aus einer im rohrförmigen Körper angeordneten Nut und einem elastischen winkelförmigen mit dem Element verbundenen Fixierungsteil besteht. Vorteilhaft ist hierbei, daß das Element 5 mit dem Handgriff verbunden ist und in der Grundposition mit dem rohrförmigen Körper verbunden ist. Nach Lösen der Rastvorrichtung verbleibt der rohrförmige Körper in seiner Aufnahmebohrung und das Element zusammen mit dem Handgriff kann relativ zum rohrförmigen Körper axial bewegt werden. Hierbei wird dann die Reinigungsvorrichtung aktiviert, so daß nach anschließendem Einbringen der Rastvorrichtung in die Grundposition mit dem Handgriff das Element sowie den rohrförmigen Körper herausgezogen und abgelesen werden kann.

Eine weitere Ausführungsform sieht vor, daß das winkelförmige Fixierungsteil gegenüber dem rohrförmigen Körper aus einer Grundposition federnd in eine Löseposition bringbar ist.

Zur einfachen Fixierung des Handgriffes bzw. des Elementes 5 gegenüber dem rohrförmigen Körper ist vorgesehen, daß der Nut des rohrförmigen Körpers eine Einführschräge vorgeschaltet ist.

Eine weitere Ausführungsform zur einfachen Handhabung einer Rastvorrichttung sieht vor, daß dem winkelförmigen Fixierungsteil ein Hebelelement zugeordnet ist.

Werden für Handgriff und Element unterschiedliche Materialien verwendet so läßt sich nach einer weiteren Ausgestaltung vorsehen, daß der Handgriff über einen Formschluß und/oder Kraftschluß mit dem Element verbunden ist.

Eine fertigungstechnisch einfache und kostengünstige Reinigungsvorrichtung wird erreicht, indem an dem dem Reservoir zugewandten Ende des rohrförmigen Körpers ein Abstreifer vorgesehen ist.

Zur Erzielung einer unlösbaren Baueinheit zwischen Element und rohrförmigen Körper, wie auch eine einwandfreien Bedienung der Reinigungsvorrichtung ist vorgesehen, daß das Element an dem dem Reservoir zugewandten Ende einen Endanschlag aufweist.

Desweiteren ist vorgesehen, daß das Hebelelement mit dem Handgriff über ein, einen Drehpunkt aufweisendes, Federelement verbunden ist. Mit Vorteil ist dabei das Federelement integrierter Bestandteil des Hebelelementes und/oder des Handgriffes.

Nach einem weiteren Merkmal ist vorgesehen, daß der elastische Steg gleichzeitig als Drehpunkt ausgebildet ist.

Darüber hinaus läßt sich zwischen dem rohrförmigen Körper und dem Rohr eine Dichtung anordnen.

In weiterer Ausgestaltung ist vorgesehen, daß zwischen dem Element im Bereich des Handgriffes und dem rohrförmigen Körper eine Dichtung vorgesehen ist.

Nach einer weiteren Ausführung ist die Dichtung durch das Element in Verbindung mit der Rastvorrichtung im verrasteten Zustand vorgespannt oder die, der Dichtung zugewandte, Stirnfläche des Elementes verläuft konisch oder in etwa rechtwinkelig zur Längsachse.

Eine günstige Ausführungsform sieht vor, daß im Endbereich des Elementes mindestens ein radial sich erstreckender Vorsprung vorgesehen ist.

Nach einer weiteren Ausgestaltung ist vorgesehen, daß das Element im Bereich der Meßmittel eingefärbt ist. Mit Vorteil enfolgt das Einfärben durch Elektrolyse.

In weiterer Ausgestaltung ist oberhalb der Meßmittel eine Erstbefüllungsmarkierung angeordnet.

Desweiteren ist vorgesehen, daß der rohrförmige Körper auf der der Reinigungsvorrichtung zugewandten Seite eine in axialer Richtung nach radial außen sich erweiternde Öffnung aufweist.

Bevorzugte Ausführungsbeispiele sind in den Zeichnungen schematisch dargestellt.

Es zeigt:
Figur 1 und 2 eine Vorrichtung zur Messung und/oder Kontrolle eines Flüssigkeitsniveaus, bei dem das Element und der Handgriff einteilig aus Metall hergestellt sind
Figur 3 und 4 eine weitere Ausführungsform einer Vorrichtung im Schnitt, bei dem der Handgriff aus Kunststoff ausgeführt ist
Figur 5 und 6 eine weitere Ausführungsform, bei dem das Element und der Handgriff aus unterschiedlichen Materialien hergestellt und über einen Form- bzw. Kraftschluß miteinander verbunden sind
Figur 7 und 8 eine spezielle Ausführungsform des Handgriffes mit einem Federelement
Figur 9 bis 11 spezielle Anordnungen von Dichtungen
Figur 12 und 13 jeweils eine Dichtung als Einzelheit, welche zwischen dem Element 5 und dem rohrförmigen Körper 6 angeordnet ist
Figur 14 und 15 eine entsprechende Ausgestaltung des Endbereiches des Elementes
Figur 16 eine Ausgestaltung des Meßbereiches des Elementes
Figur 17 eine Ausführungsform einer Reinigungsvorrichtung.

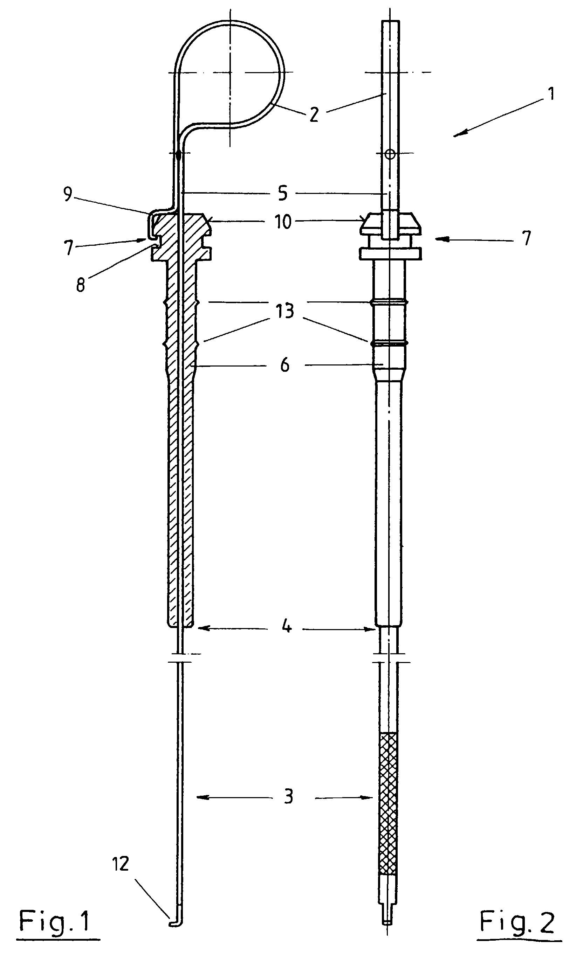

Die in Figur 1 und 2 dargestellte Vorrichtung zur Messung und/oder Kontrolle eines Flüssigkeitsniveaus in einem Reservoir (nicht dargestellt) besteht im wesentlichen aus dem rohrförmigen Körper 6, dem Element 5 und dem Handgriff 2. Der rohrförmige Körper 6 wird dabei in eine vorhandene Öffnung oder ein vorhandenes Rohr einer Maschine oder eines Kraftfahrzeuges eingebracht, wobei die ringförmigen Vorsprünge 13 eine ausreichende axiale Arretierung gewährleisten. Der Handgriff 2 ist bei dieser Ausführung einteilig mit dem Element 5 ausgeführt, wobei der eine Teil des Elementes 5 durch den rohrförmigen Körper 6 hindurch verläuft, wobei an seinem dem Reservoir zugewandten Ende ein Endanschlag 12, durch Abwinkeln des Elementes 5 hergestellt ist. Dieser Endanschlag 12 verhindert ein Herausrutschen des Elementes 5 aus dem rohrförmigen Körper 6 und gewährleistet darüber hinaus eine einwandfreie Bedienung der Reinigungsvorrichtung 4. Die Reinigungsvorrichtung 4 wird betätigt, indem das Element 5 gegenüber dem rohrförmigen Körper 6 axial solange verschoben wird, bis der Endanschlag 12 am rohrförmigen Element 6 anliegt. Zusätzlich lassen sich der Reinigungsvorrichtung 4 noch O-Ringe bzw. Abstreifringe einbringen, so daß die Reinigungswirkung erhöht wird. Die Meßmittel 3 beziehen sich auf kenntlich gemachte Bereiche am Element 5, wobei die untere und obere Markierung jeweils einen vorbestimmten Wert für eine Minimumbefüllung bzw. Maximumbefüllung des Reservoirs darstellen.

Der Handgriff 2 besitzt in dem am Element 5 benachbarten Bereich eine Rastvorrichtung 7, welche aus einer Nut 8 im rohrförmigen Körper 6 und einem Fixierungsteil 9 des Elementes 5 besteht. Zusätzlich ist noch eine Einführschräge 10 vorgesehen, die ein leichtes Einrasten der Rastvorrichtung 7 in die Nut 8 gewährleistet, während durch die Abwinkelung des winkelförmigen Fixierungsteiles 9 in dieser Position ein Herausziehen unmöglich erfolgen kann. Erst durch Biegen des elastisch gehaltenen Handgriffes verläuft das winkelförmige Fixierungsteil 9 die Nut 8, so daß anschließend das Element 5 gegenüber dem rohrförmigen Körper 6 axial verschoben werden kann.

Die Messung des Flüssigkeitsniveaus in einem Reservoir erfolgt in der Weise, daß zunächst der Handgriff 2 mit einer Hand elastisch abgewinkelt wird, solange bis das winkelförmige Fixierungsteil 9 aus der Nut 8 heraustritt, so daß anschließend durch Ziehen am Handgriff 2 der Endanschlag 12 des Elementes 5 bis zum rohrförmigen Körper 6 bewegt wird, hierbei wird die Reinigungsvorrichtung 4 aktiv. Anschließend wird der Handgriff 2 in Richtung der Rastvorrichtung 7 bewegt durch die Einführschräge 10 wird das winkelförmige Fixierungsteil 9 elastisch nach außen verformt, anschließend springt das winkelförmige Fixierungsteil 9 in die Nut 8, so daß anschließend durch geradliniges Herausziehen des Handgriffes 2 sowohl das Element 5 als auch der rohrförmige Körper 6 aus seiner Öffnung herausgezogen werden kann und ein Ablesen des Flüssigkeitsniveaus an den Meßmitteln 3 erfolgen kann.

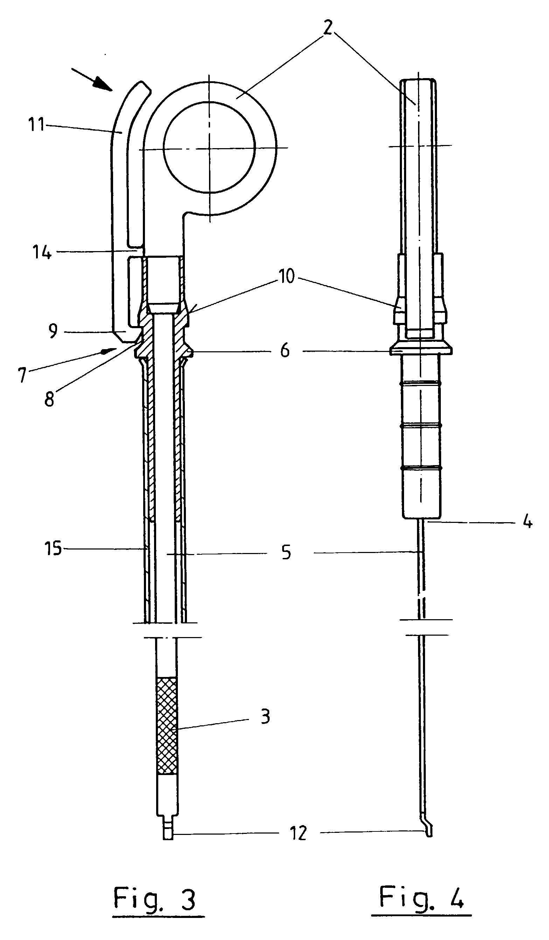

Aus den Figuren 3 und 4 ist eine Ausführungsform zu entnehmen, die im Prinzip der Ausführung gemäß Figur 1 und 2 entspricht, mit der Ausnahme, daß der Handgriff 2 als massives Teil ausgebildet ist, z.B. aus Kunststoff, das Element 5 ist direkt mit dem Handgriff 2 verbunden, der rohrförmige Körper 6 zeigt wiederum die Rastvorrichtung 7, wobei dem Handgriff 2 ein Hebelelement 11 zugeordnet ist, welches durch Drücken im oberen Bereich über den elastischen Steg 14 eine Kippbewegung des winkelförmigen Fixierungsteiles 9 zuläßt. Der rohrförmige Körper 6 ist in der Figur 3 durch ein weiteres Rohr 15 umgeben, wobei dieses Rohr zum Motor eines Kraftfahrzeuges bzw. einer Maschine zugeordnet ist. Die Wirkungsweise ist entsprechend dem in Figur 1 und 2 dargestellten Ausführungsbeispiel, indem durch Drücken auf das Hebelelement 11 das winkelförmige Fixierungsteil 9 aus der Nut 8 herausgebracht wird, so daß anschließend die Reinigungsvorrichtung 4 aktiv wird, indem der Endanschlag 12 bis zum rohrförmigen Element 6 verschoben wird. Anschließend wird der Handgriff 2 zusammen mit dem Element 5 axial zusammengeschoben, wobei das winkelförmige Fixierungsteil 9 über die Einführschräge 10 in die Nut 8 einrastet, so daß anschließend bei bloßem axialem Ziehen am Handgriff 2 das Element 5 zusammen mit dem rohrförmigen Körper 6 aus dem Rohr 15 herausgebracht werden kann und die Meßvorrichtung 3 ablesbar ist.

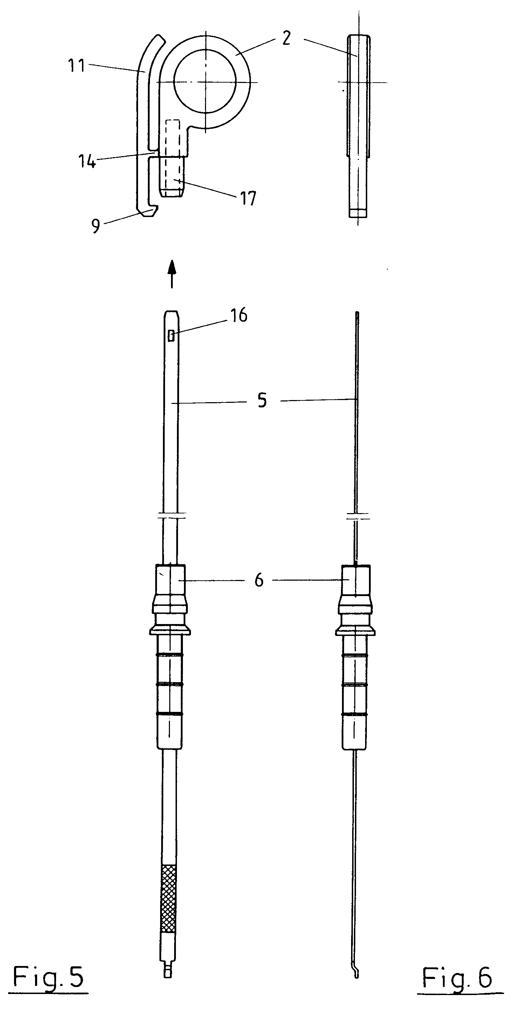

Aus den Figuren 5 und 6 ist wiederum eine Ausführungsform dargestellt, bei dem der Handgriff 2, das Hebelelement 11, der elastische Steg 14 und das winkelförmige Fixierungsteil 9 einteilig ausgebildet ist. Es bietet sich hier die Herstellung aus Kunststoff, z.B. durch Spritzguß an. Das Element 5 ist als Flachelement ausgebildet und befindet sich im rohrförmigen Körper 6. Bei Verwendung von unterschiedlichen Materialien von Handgriff 2 und Element 5 bietet sich eine Verbindung durch Form- bzw. Kraftschluß an, indem ein Nocken 16, herausstehende Zunge 16 oder dergleichen vorgesehen ist, so daß durch Einbringen des Elementes 5 mit dem Nocken 16 in eine Ausnehmung 17 des Handgriffes 2 einen Formschluß, Kraftschluß oder Preßsitz gestattet um eine feste Verbindung zwischen Element 5 und Handgriff 2 zu erzielen.

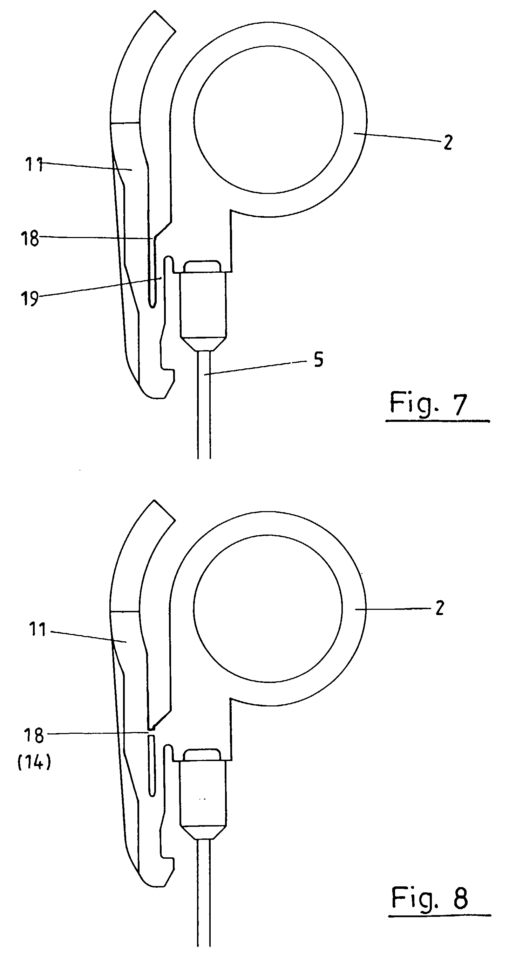

Die Figur 7 zeigt einen Handgriff 2 als Einzelheit, bei dem das Hebelelement 11 über ein Federelement 19 mit dem Handgriff 2 verbunden ist. Das Federelement 19 verläuft dabei in etwa parallel zum Element 5 und wird dadurch beim kraftvollen Herausziehen des Handgriffes 2 nicht federnd belastet, sondern lediglich unter Zugspannung gesetzt. Hierdurch kann das Federelement 19 entsprechend lang und elastische ausgebildet werden, so daß keine Materialüberbeanspruchung, insbesondere bei Kälte oder Hitze in diesem Bereich entsteht. Beim Betätigen des Handgriffes 2, indem das Hebelelement 11 in Richtung des Handgriffes 2 bewegt wird, stützt sich das Hebelelement 11 am Drehpunkt 18 ab.

Figur 8 zeigt einen Handgriff 2 im Prinzip wie in Figur 7 bereits dargestellt, wobei jedoch der Drehpunkt 18 mit dem elastischen Steg 14 zusammenfällt. Dieser feste Verbindungssteg 14 stabilisiert das Hebelelement 11 und gewährleistet eine einwandfreie Rückstellung.

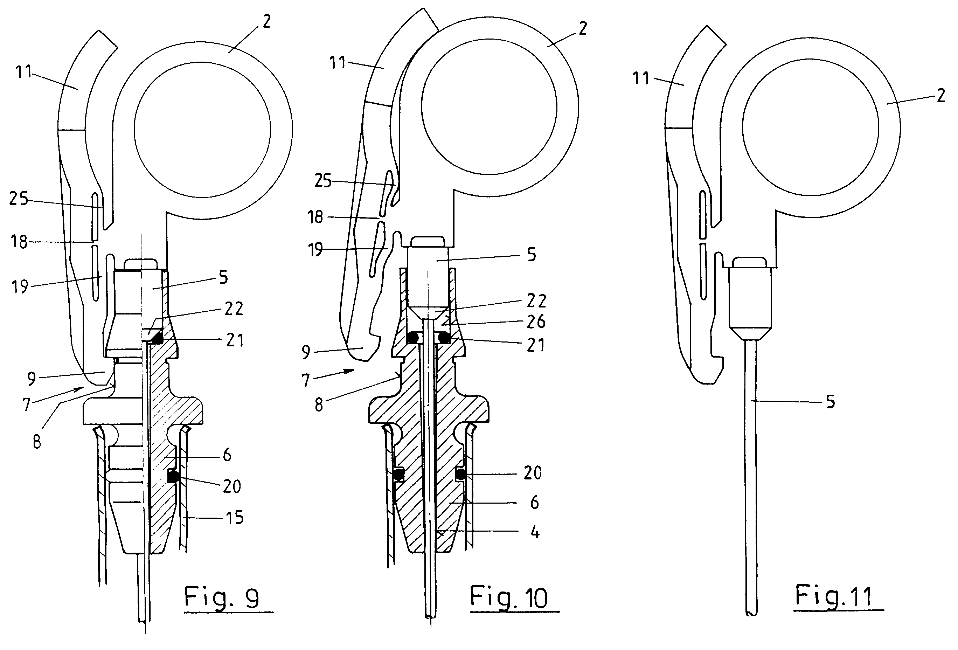

Die Figuren 8 bis 11 zeigen einen Handgriff 2 gemäß der Figur 8, teilweise im Einbauzustand. Die Figur 11 zeigt als Einzelheit das Element 5 zusammen mit dem Handgriff 2 und dem Hebelelement 11 als Einzelheit im demontierten Zustand.

Die Figur 9 und 10 zeigten sowohl das Element 5 als auch den rohrförmigen Körper 6, wobei zwischen dem Rohr 15, welches einer Verbrennungskraftmaschine (nicht dargestellt) zugeordnet sein kann, eine Dichtung 20, welche den rohrförmigen Körper 6 gegenüber dem Rohr 15 abdichtet.

Das Hebelelement 11 ist in Figur 9 über die Rastvorrichtung 7 mit dem rohrförmigen Körper 6 im verrasteten Zustand dargestellt, so daß das Fixierungsteil 9 in der entsprechenden Nut 8 des rohrförmigen Körpers 6 eingerastet ist. In diesem Zustand ist das Federelement 19 in etwa parallel zur Längsachse des Elementes 5 verlaufend angeordnet. Oberhalb des Drehpunktes 18 zeigt diese Ausführungsform einen weiteren elastischen federnden Bereich 25. Hierdurch wird eine weitere Verbesserung der Festigkeit und des Rückstellverhaltens erzielt.

Zwischen dem Element 5 und dem rohrförmigen Körper 6 ist die Dichtung 21 entsprechend eingekammert.

Aus der Figur 10 ist der entrastete Handgriff 2 zu entnehmen, die Dichtung 21 ist im Gegensatz zur Figur 9 nun entspannt, allerdings erhält sie über die Aufnahmebohrung 26 auf ihrem Außenumfang eine entsprechende Vorspannung, so daß sie positioniert bleibt. Dies wurde deshalb gewählt, daß beim Reinigungsvorgang durch die Reinigungsvorrichtung 4 keine Dichtreibung entsteht, die den rohrförmigen Körper 6 aus dem Rohr 15 ziehen könnte. Die Dichtung 21 ist in der Aufnahmebohrung 26 nicht gekammert, so daß sich eine hinterschnittfreie Aufnahmebohrung 26 fertigungstechnisch gut herstellen läßt.

Die Figur 11 zeigt, daß bei Betätigung des Hebelelementes 11 sowie der weitere elastische federnde Bereich 25 um den Drehpunkt 15 bewegbar und entsprechend vorspannbar ist. Das in Figur 9 in etwa achsparallel verlaufende Federelement 19 sowie der elastische federnde Bereich 25 sind in dieser Position entsprechend verformt und wurden somit vorgespannt, so daß eine entsprechende Rückstellung vorhanden ist.

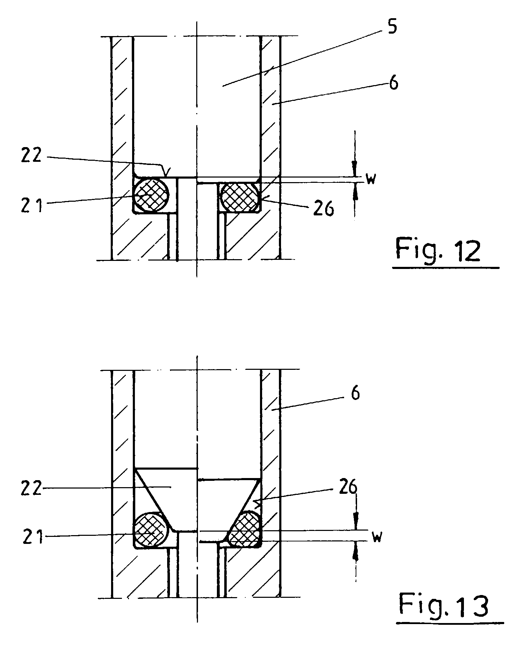

Aus den Figuren 12 und 13 ist als Einzelheit eine Dichtung 21 zu erkennen, die in der Aufnahmebohrung 26 des rohrförmigen Körpers 6 angeordnet ist. In der Figur 12 ist die Dichtung 21 zwischen der Stirnfläche 22 des Elementes 5 und einer weiteren parallelen Fläche des rohrförmigen Körpers 6 axial verspannt. Bei dieser Formgebung wird bei einem geringen Weg w eine große Rückstellkraft erreicht, wobei allerdings enge Toleranzen einzuhalten sind. Aus der Figur 13 dagegen ist eine konisch verlaufende Stirnfläche 22 vorgesehen, wobei die Dichtung 21 wiederum auf einer in etwa rechtwinkelig zur Längsachse verlaufenden Fläche des rohrförmigen Körpers 6 angeordnet ist. Bei größerem Weg w wird eine geringere Rückstellkraft erzielt, wobei jedoch die Toleranzen größer sein können und damit problemlos beherrschbar sind.

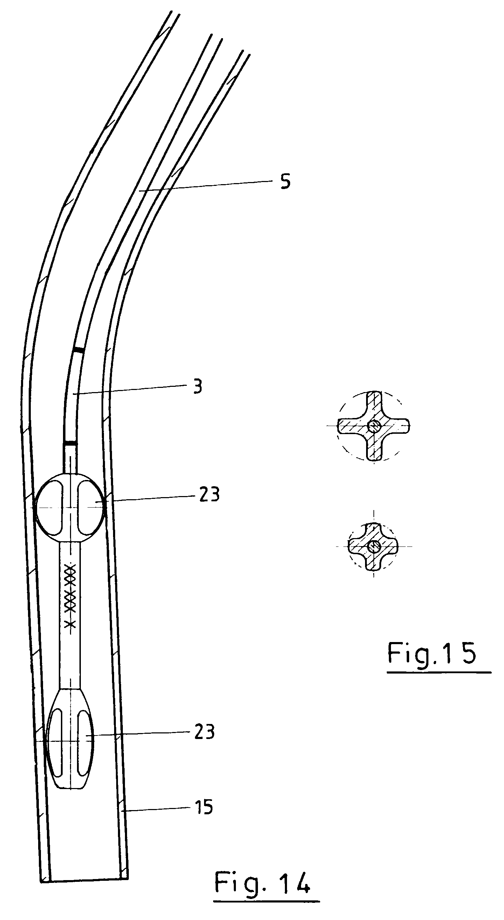

Aus den Figuren 14 und 15 ist ein Element 5 zu entnehmen, welches in einem gebogenen Rohr 15 angeordnet ist. Um die Meßmittel 3 entsprechend von der Innenwandung des Rohres 15 fernzuhalten, sind entsprechende Vorsprünge 23 vorgesehen, die aus Kunststoff einteilig herstellbar sind, wobei die entsprechenden Querschnitte aus der Figur 15 entnehmbar sind. Der Außendurchmesser der unteren Vorsprünge 23 ist dabei zum besseren Einfädeln des Elementes 5 in das Rohr 15 kleiner gehalten als die übrigen Vorsprünge 23. Diese Vorsprünge 23 dienen dabei gleichzeitig beim Bedienen der Reinigungsvorrichtung als Endanschlag.

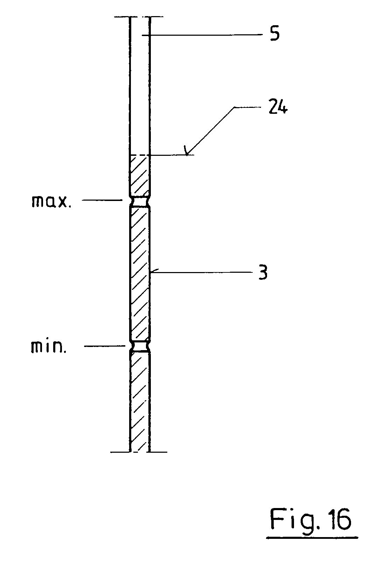

Die Figur 16 zeigt wiederum ein Element 5, bei dem der Bereich der Meßmittel 3 eingefärbt wurde, dieses Einfärben läßt sich auf elektrolytischer Basis erzielen, so daß ein spiegelfreies Ablesen der entsprechenden Markierungen möglich ist. Gleichzeitig läßt sich noch eine Erstbefüllungsmarkierung 24 anbringen, die vor Inbetriebnahme einer Brennkraftmaschine werksseitig verwendbar ist.

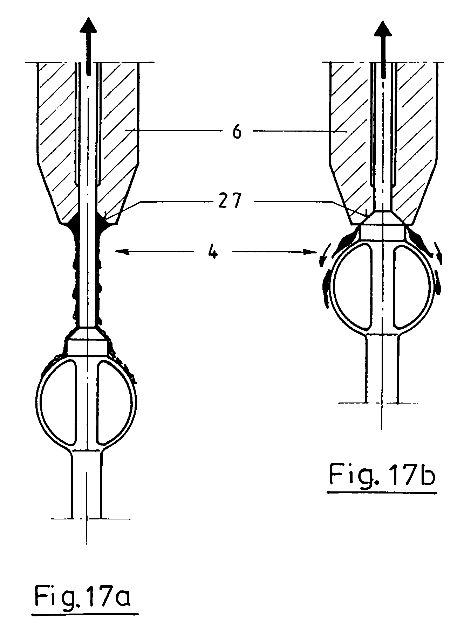

Aus der Figur 17 ist ein rohrförmiger Körper 6 mit einer sich zum Reservoir hin erweiternden Öffnung 27 zu entnehmen. Diese Öffnung 27 verhindert beim Reinigungsvorgang eine Ansammlung von Restöl, so daß mit einem einwandfreien Meßvorgang gerechnet werden kann.

### Bezugszeichenliste

- 1: - Vorrichtung
- 2: - Handgriff
- 3: - Meßmittel
- 4: - Reinigungsvorrichtung
- 5: - Element
- 6: - rohrförmiger Körper
- 7: - Rastvorrichtung
- 8: - Nut
- 9: - Fixierungsteil
- 10: - Einführschräge
- 11: - Hebelelement
- 12: - Endanschlag
- 13: - ringförmige Vorsprünge
- 14: - elastischer Steg
- 15: - Rohr
- 16: - Nocken
- 17: - Ausnehmung
- 18: - Drehpunkt
- 19: - Federelement
- 20: - Dichtung
- 21: - Dichtung
- 22: - Stirnfläche
- 23: - Vorsprung
- 24: - Erstbefüllungsmarkierung
- 25: - elastischer federnder Bereich
- 26: - Aufnahmebohrung
- 27: - Öffnung
- w: - Weg

## Patentansprüche

1. Vorrichtung zur Messung und/oder Kontrolle eines Flüssigkeitsniveaus in einem Reservoir, wobei mindestens ein minimales und/oder maximales Niveau darstellbar ist, indem die Vorrichtung in ein rohrförmiges Element des Reservoirs einbringbar ist, wobei die Vorrichtung aus einem außerhalb des Reservoirs angeordneten Handgriff und mit innerhalb des Reservoirs angeordneten Meßmitteln besteht und daß die Meßmittel mit einer durch den Handgriff bedienbaren Reinigungsvorrichtung versehen sind,
dadurch gekennzeichnet,
daß innerhalb des rohrförmigen Körpers (6) ein Element (5) angeordnet ist, welches bis in den Bereich des Handgriffes (2) verläuft, und daß sich das Element (5) ausgehend vom Handgriff (2) den rohrförmigen Körper (6) durchdringend bis in das Reservoir hinein erstreckt, wobei im Bereich des Handgriffes (2) oder des dem Handgriff (2) zugewandten Bereich des Elementes (5) und dem rohrförmigen Körper (6) eine Rastvorrichtung (7) zur festen aber lösbaren Verbindung zwischen dem Element (5) und dem rohrförmigen Körper (6) angeordnet ist.

2. Vorrichtung nach Anspruch 1,
dadurch gekennzeichnet,
daß die Rastvorrichtung (7) aus einer im rohrförmigen Körper (6) angeordneten Nut (8) und einem elastischen winkelförmigen mit dem Element (5) verbundenen Fixierungsteil (9) besteht.

3. Vorrichtung nach Anspruch 2,
dadurch gekennzeichnet,
daß das winkelförmige Fixierungsteil (9) gegenüber dem rohrförmigen Körper (6) aus einer Grundposition federnd in eine Löseposition bringbar ist.

4. Vorrichtung nach Anspruch 2,
dadurch gekennzeichnet,
daß der Nut (8) des rohrförmigen Körpers (6) eine Einführschräge (10) vorgeschaltet ist.

5. Vorrichtung nach Anspruch 2,
dadurch gekennzeichnet,
daß dem winkelförmigen Fixierungsteil (9) ein Hebelelement (11) zugeordnet ist.

6. Vorrichtung nach Anspruch 1,
dadurch gekennzeichnet,
daß der Handgriff (2) über einen Formschluß und/oder Kraftschluß mit dem Element (5) verbunden ist.

7. Vorrichtung nach Anspruch 1,
dadurch gekennzeichnet,
daß an dem dem Reservoir zugewandten Ende des rohrförmigen Körpers ein Abstreifer vorgesehen ist.

8. Vorrichtung nach Anspruch 1,
dadurch gekennzeichnet,
daß das Element (5) an dem dem Reservoir zugewandten Ende einen Endanschlag (12) aufweist.

9. Vorrichtung nach Anspruch 1,
dadurch gekennzeichnet,
daß das Hebelelement (11) mit dem Handgriff (2) über ein, einen Drehpunkt (18) aufweisendes, Federelement (19) verbunden ist.

10. Vorrichtung nach Anspruch 10,
dadurch gekennzeichnet,
daß das Federelement (19) integrierter Bestandteil des Hebelelementes (11) und/oder des Handgriffes (2) ist.

11. Vorrichtung nach Anspruch 10,
dadurch gekennzeichnet,
daß der elastische Steg (14) gleichzeitig als Drehpunkt (18) ausgebildet ist.

12. Vorrichtung nach Anspruch 1,
dadurch gekennzeichnet,
daß zwischen dem rohrförmigen Körper (6) und dem Rohr (15) eine Dichtung (20) angeordnet ist.

13. Vorrichtung nach Anspruch 1,
dadurch gekennzeichnet,
daß zwischen dem Element (5) im Bereich des Handgriffes (2) und dem rohrförmigen Körper (6) eine Dichtung (21) vorgesehen ist.

14. Vorrichtung nach Anspruch 13,
dadurch gekennzeichnet,
daß die Dichtung (21) durch das Element (5) in Verbindung mit der Rastvorrichtung (7) im verrasteten Zustand vorgespannt ist.

15. Vorrichtung nach Anspruch 13,
dadurch gekennzeichnet,
daß die, der Dichtung (21) zugewandte, Stirnfläche (22) des Elementes (5) konisch oder in etwa rechtwinkelig zur Längsachse verläuft.

16. Vorrichtung nach Anspruch 1,
dadurch gekennzeichnet,
daß im Endbereich des Elementes (5) mindestens ein radial sich erstreckender Vorsprung (23) vorgesehen ist.

17. Vorrichtung nach Anspruch 1,
dadurch gekennzeichnet,
daß das Element (5) im Bereich der Meßmittel (3) eingefärbt ist.

18. Vorrichtung nach Anspruch 17,
dadurch gekennzeichnet,
daß das Einfärben durch Elektrolyse erfolgt.

19. Vorrichtung nach Anspruch 1,
dadurch gekennzeichnet,
daß oberhalb der Meßmittel (3) eine Erstbefüllungsmarkierung (21) angeordnet ist.

20. Vorrichtung nach Anspruch 1,
dadurch gekennzeichnet,
daß der rohrförmige Körper (6) auf der der Reinigungsvorrichtung (4) zugewandten Seite eine nach radial außen sich erweiternde Öffnung (27) aufweist.
